# EUROPEAN PATENT SPECIFICATION

(11) **EP 1 531 295 B1**
(45) Date of publication and mention of the grant of the patent: **23.04.2008**
(21) Application number: 03257140.8
(22) Date of filing: 12.11.2003
(51) Int. Cl.: F16J 15/42

(54) **Gas film hydraulic shaft seal**
Hydraulische Wellendichtung mit Gasfilm
Joint d'étanchéité pour arbre rotatif de type hydraulique avec film gazeux

(43) Date of publication of application: 18.05.2005
(73) Proprietor: United Technologies Corporation, Hartford, CT 06101 (US)
(72) Inventor: McCutchan, Sean, Hamden, CT 06518 (US)
(74) Representative: Leckey, David Herbert

(56) References cited:
- GB-A- 2 125 118
- US-A- 4 570 947

## Description

### BACKGROUND OF THE INVENTION

The present invention relates to a seal system for use in a rotary machine such as a gas turbine engine.

The present invention address a fundamental issue plaguing current designs considered for the sealing of an annulus between two concentric shafts where rotation of the sealing members is required due to a lack of stationary mounting points. Prior art sealing methods incorporate a solid secondary seal such as a piston ring. For any inter-shaft applications lacking stationary sealing members, inertia forces experienced by a solid secondary seal create high friction forces between the secondary seal and its supporting members, thereby preventing axial travel or at least resulting in undesirable wear.

Prior art hydraulic seals for inter-shaft applications in a gas turbine engine are disclosed in GB 2125118 A and US 4570947.

### SUMMARY OF THE INVENTION

Accordingly, it is an object of the present invention to provide a seal system for use in a rotary machine.

It is a further object of the present invention to provide a seal system which is capable of sealing the annulus formed between two concentric shafts with co-rotating or counter-rotating behavior.

It is yet another object of the present invention to provide a seal system which is capable of sealing the annulus formed between a shaft and a stationary member.

It is still another object of the present invention to provide a seal system which reduces gas leakage from a high pressure region to a lower pressure region.

The foregoing objects are attained by the seal assembly of the present invention.

In accordance with the present invention, a seal system for use in a rotary machine is provided as set forth in claim 1.

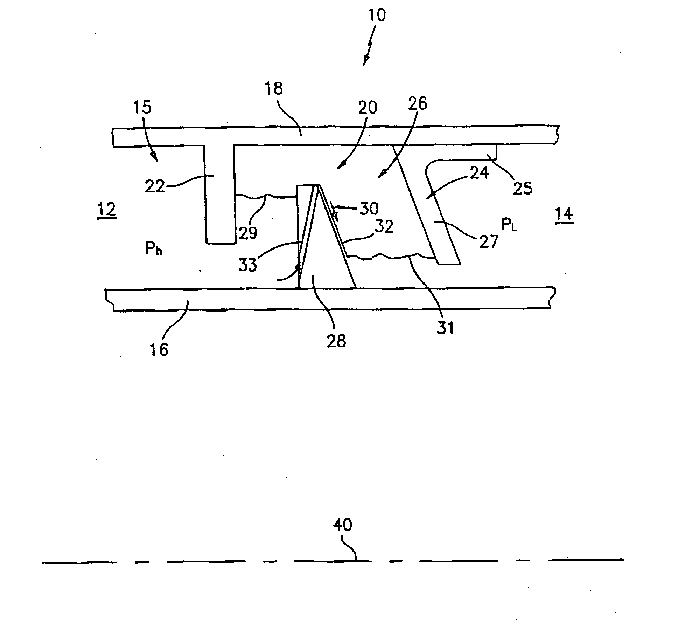

Other details of the gas film hydraulic shaft seal of the present invention are set forth in the following detailed description and the accompanying drawing wherein like reference numerals depict like elements.

### BRIEF DESCRIPTION OF THE DRAWINGS

The Figure illustrates a shaft seal system in accordance with the present invention.

### DETAILED DESCRIPTION OF THE PREFERRED EMBODIMENT(S)

The Figure illustrates a shaft seal system 10 in accordance with the present invention. In this assembly, a liquid is used in combination with a gas film to reduce gas flow from a high pressure Pₕ region 12 to a lower pressure P_{L} region 14 in an annulus 15 located between first and second members 16 and 18, respectively. The first and second members 16 and 18 may be two shafts with co-rotating or counter-rotating behavior having a centerline 40. Alternatively, one of the members 16 and 18 may be a shaft and the other of the members 16 and 18 may be a stationary member.

As can be seen from the Figure, a trough 20 is formed in the annulus 15 by the second member 18 and by parts 22 and 24. The part 22 comprises a radially extending member which protrudes from and is preferably integrally formed with the second member 18. The part 24 comprises a ring member of V-shaped cross-section having a first leg 25 attached to the second member 18 and a second leg 27 at an angle to the first leg 25. The part 24 may be attached to the second member 18 using any suitable means known in the art.

The trough 20 is filled with a liquid 26, such as oil. The levels 29 and 31 of the liquid are maintained by the pressures Pₕ and P_{L} respectively. A fin 28 is provided in the trough 20. As can be seen from the Figure, the fin 28 protrudes into the liquid 26. The fin 28 is mounted on the first or inner member 16 and has a passageway 33 extending therethrough. The fin 28 may be mounted on the first member 16 using any suitable means known in the art.

In use, some gas from the high pressure region 12 is allowed to pass through the passageway 33 in the fin 28 to form a gas film or gas-liquid mixture 30 that separates the liquid 26 from an inclined surface 32 of the fin 28. The gas film or mixture 30 offers less friction than the parts 18, 22 and 24, thus enabling the liquid 26 to rotate at a velocity approaching that of the second member 18. The surface 32 is angled for the purpose of retaining the gas film or mixture 30 along the surface 32. The resulting fluid inertia prevents nearly all gas leakage from the high pressure region 12 to the low pressure region 14. Thus, a liquid seal is created which prevents gas leakage between the two members 16 and 18. As mentioned before, the members 16 and 18 may be shafts that rotate in opposite directions or the same direction.

The liquid 26 in the seal system is preferably oil which is replenished when the rotary machine is operating.

It is apparent that there has been provided in accordance with the present invention a gas film hydraulic shaft seal which fully satisfies the objects, means, and advantages set forth hereinbefore. While the present invention has been described in the context of specific embodiments thereof, other alternatives, modifications, and variations will become apparent to those skilled in the art having read the foregoing description. Accordingly, it is intended to embrace those alternatives, modifications, and variations which fall within the broad scope of the appended claims.

## Claims

1. A seal system (10) for a rotary machine comprising:
a first member (16) and a second member (18) forming an annulus (15);
a high pressure region (12) and a low pressure region (14) in the annulus (15); and
a liquid seal intermediate said first and second members (16,18) and intermediate said high pressure region (12) and low pressure region (14) for reducing gas leakage from said high pressure region (12) to said low pressure region (14), said liquid seal comprising a trough (20) containing a liquid (26) and a fin (28) which protrudes into said liquid (26) in said trough (20), said fin (28) having a gas passageway (33) extending therethrough;
**characterised in that** said fin (28) has an inclined surface (32) and wherein a gas film (30) is formed on said inclined surface (32) to separate said liquid (26) from said inclined surface (32).

2. A seal system according to claim 1, wherein said first member (16) comprises a stationary member and said second member (18) comprises a shaft.

3. A seal system according to claim 1, wherein said first member (16) comprises a first shaft and said second member (18) comprises a second shaft.

4. A seal system according to claim 3, wherein said first shaft (16) and said second shaft (18) are co-rotating.

5. A seal system according to claim 3, wherein said first shaft (16) and said second shaft (18) are counter-rotating.

6. A seal system according to any preceding claim, wherein said trough (20) is formed by said second member (18), a first part (22) attached to said second member (18), and a second part (24) attached to said second member (18).

7. A seal system according to claim 6, wherein said first part comprises a radially extending member (22) protruding from said second member (18).

8. A seal system according to claim 6 or 7, wherein said first part (22) is integrally formed with said second member (18).

9. A seal system according to claim 6, 7 or 8, wherein said second part has a first leg (25) attached to said second member (18) and a second leg (27) at an angle to said first leg (25).

## Patentansprüche

1. Dichtungssystem (10) für eine Rotationsmaschine, aufweisend:
ein erstes Element (16) und ein zweites Element (18), die einen Ringkörper (15) bilden;
eine Hochdruckzone (12) und eine Niedrigdruckzone (14) in dem Ringkörper (15); und
eine Flüssigkeitsdichtung zwischen dem ersten und dem zweiten Element (16, 18) und zwischen der Hochdruckzone (12) und der Niedrigdruckzone (14) zum Reduzieren der Gasleckage von der Hochdruckzone (12) in die Niedrigdruckzone (14), wobei die Flüssigkeitsdichtung eine Rinne (20), die eine Flüssigkeit (26) enthält, sowie eine Rippe (28) aufweist, die in die Flüssigkeit (26) in der Rinne (20) hineinragt, wobei die Rippe (28) ein sich durch diese hindurch erstreckende Gaspassage (33) aufweist;
**dadurch gekennzeichnet, dass** die Rippe (28) eine schräg verlaufende Oberfläche (32) aufweist und dass ein Gasfilm (30) auf der schräg verlaufenden Oberfläche (32) gebildet wird, um die Flüssigkeit (26) von der schräg verlaufenden Oberfläche (32) zu separieren.

2. Dichtungssystem nach Anspruch 1,
wobei das erste Element (16) ein stationäres Element aufweist und das zweite Element (18) eine Welle aufweist.

3. Dichtungssystem nach Anspruch 1,
wobei das erste Element (16) eine erste Welle aufweist und das zweite Element (18) eine zweite Welle aufweist.

4. Dichtungssystem nach Anspruch 3,
wobei sich die erste Welle (16) und die zweite Welle (18) ko-rotationsmä-ßig bewegen.

5. Dichtungssystem nach Anspruch 3,
wobei sich die erste Welle (16) und die zweite Welle (18) gegenläufig rotationsmäßig bewegen.

6. Dichtungssystem nach einem der vorausgehenden Ansprüche,
wobei die Rinne (20) durch das zweite Element (18) gebildet ist und wobei ein erster Teil (22) an dem zweiten Element (18) angebracht ist und ein zweiterTeil (24) an dem zweiten Element (18) angebracht ist.

7. Dichtungssystem nach Anspruch 6,
wobei der erste Teil ein sich radial erstreckendes Element (22) aufweist, das von dem zweiten Element (18) wegsteht.

8. Dichtungssystem nach Anspruch 6 oder 7,
wobei der erste Teil (22) mit dem zweiten Element (18) in integraler Weise ausgebildet ist.

9. Dichtungssystem nach Anspruch 6, 7 oder 8,
wobei der zweite Teil einen ersten Schenkel (25), der an dem zweiten Element (18) angebracht ist, sowie einen zweiten Schenkel (27) in einem Winkel zu dem ersten Schenkel (25) aufweist.

## Revendications

1. Système (10) de joint pour machine tournante comportant :
un premier élément (16) et un deuxième élément (18) formant un espace annulaire (15) ;
une région (12) à haute pression et une région (14) à basse pression dans l'espace annulaire (15) ; et
un joint liquide entre lesdits premier et deuxième éléments (16, 18) et entre ladite région (12) à haute pression et ladite région (14) à basse pression pour réduire les fuites de gaz de ladite région (12) à haute pression vers ladite région (14) à basse pression, ledit joint liquide comportant une auge (20) contenant un liquide (26) et une nervure (28) saillant dans ledit liquide (26) contenu dans ladite auge (20), ladite nervure (28) étant dotée d'un passage (33) de gaz s'étendant à travers celle-ci ;
**caractérisé en ce que** ladite nervure (28) présente une surface inclinée (32) et dans lequel un film gazeux (30) est formé sur ladite surface inclinée (32) pour séparer ledit liquide (26) de ladite surface inclinée (32).

2. Système de joint selon la revendication 1, ledit premier élément (16) comportant un élément fixe et ledit deuxième élément (18) comportant un arbre.

3. Système de joint selon la revendication 1, ledit premier élément (16) comportant un premier arbre et ledit deuxième élément (18) comportant un deuxième arbre.

4. Système de joint selon la revendication 3, ledit premier arbre (16) et ledit deuxième arbre (18) étant corotatifs.

5. Système de joint selon la revendication 3, ledit premier arbre (16) et ledit deuxième arbre (18) étant contrarotatifs.

6. Système de joint selon l'une quelconque des revendications précédentes, ladite auge (20) étant formée par ledit deuxième élément (18), une première pièce (22) fixée audit deuxième élément (18) et une deuxième pièce (24) fixée audit deuxième élément (18).

7. Système de joint selon la revendication 6, ladite première pièce comportant un élément (22) s'étendant radialement et saillant dudit deuxième élément (18).

8. Système de joint selon la revendication 6 ou 7, ladite première pièce (22) étant formée de façon intégrée avec ledit deuxième élément (18).

9. Système de joint selon la revendication 6, 7 ou 8, ladite deuxième pièce étant dotée d'une première branche (25) fixée audit deuxième élément (18) et d'une deuxième branche (27) formant un angle avec ladite première branche (25).
